# EUROPEAN PATENT APPLICATION

(11) **EP 1 746 441 A2**
(43) Date of publication of application: **24.01.2007**
(21) Application number: 06013003.6
(22) Date of filing: 23.06.2006
(51) Int. Cl.: G01T 1/29

(54) **Photoconductive sheet and radiation imaging panel**

(30) Priority: 24.06.2005 JP 2005185107
(71) Applicant: FUJI PHOTO FILM CO., LTD., Minami-Ashigara-shi, Kanagawa-ken (JP)
(72) Inventor: Miyake, Kiyoteru, Fuji Photo Film Co, Ashigarakami-gun Kanagawa-ken (JP); Tanaka, Motoyuki, Fuji Photo Film Co, Ashigarakami-gun Kanagawa-ken (JP)
(74) Representative: Klunker . Schmitt-Nilson . Hirsch

(57) **Abstract**

A photoconductive sheet (34, 104) for use as a photoconductive layer in a radiation imaging panel (30, 100) which records an electrostatic latent image representing a radiographic image, formed of a bismuth-mixed metal oxide Bi₁₂MO₂₀ so as to exhibit a first light reflectance at a first wavelength of 750 nm and a second light reflectance at a second wavelength of 350 nm, where M is at least one of Ge, Si, and Ti, and the first light reflectance is seven or more times greater than the second light reflectance.

## Description

### BACKGROUND OF THE INVENTION

### Field of the Invention

The present invention relates to a photoconductive sheet constituting a radiation imaging panel which is suitable for use in radiation imaging devices such as X-ray imaging devices, and also relates to such a radiation imaging panel.

### Description of the Related Art

In some X-ray imaging panels which are conventionally known in the field of medical X-ray imaging, a photoconductive layer sensitive to X-rays is used as a photosensitive layer, and an electrostatic latent image produced by X-rays in the photoconductive layer is recorded and read by using light or a great number of electrodes. Such X-ray imaging panels are superior in resolution to the indirect radiography using a television image pickup tube, which is a well known imaging technique.

That is, in each of the above X-ray imaging panels, electric charges corresponding to X-ray energy are generated by applying X rays to a charge generation layer arranged in the X-ray imaging panel, and the generated electric charges are read out in the form of an electric signal. That is, the photoconductive layer has the function of the charge generation layer.

Since the bismuth-mixed metal oxides Bi₁₂MO₂₀ (where M is at least one of Ge, Si, and Ti) are photoconductive and dielectric, use of the bismuth-mixed metal oxides Bi₁₂MO₂₀ in a photoconductive layer has been investigated. For example, Japanese Unexamined Patent Publication Nos. 11(1999)-211832, 11(1999)-237478, and 2000-249769 disclose use of Bi₁₂GeO₂₀ or Bi₁₂SiO₂₀ in a photoconductive layer, and M. Valant et al., "Processing and Dielectric Properties of Sillenite Compounds Bi12MO20-δ (M=Si, Ge, Ti, Pb, Mn, B1/2P1/2)", Journal of American Ceramic Society, Vol. 84, pp.2900-2904, 2001 disclose sintering of Bi₁₂MO₂₀.

However, the light reflectance of Bi₁₂MO₂₀ has not been investigated in the above documents. For example, although the absorption spectra of the single crystals of Bi₁₂SiO₂₀ and Bi₁₂GeO₂₀ are disclosed in "Physica Status Solidi (a)", Vol. 89, pp. 263-270, 1985, nothing about the light reflectance or photoconductivity is disclosed in this document.

### SUMMARY OF THE INVENTION

The present invention has been made in view of such circumstances.

The first object of the present invention is to provide a photoconductive sheet which is formed of Bi₁₂MO₂₀, collect a great amount of X-ray charges, and is to be used as a photoconductive layer in a radiation imaging panel which records an electrostatic latent image representing a radiographic image.

The second object of the present invention is to provide a radiation imaging panel which records an electrostatic latent image representing a radiographic image, and uses a photoconductive layer of Bi₁₂MO₂₀ which can collect a great amount of X-ray charges.

In order to accomplish the first object, according to the first aspect of the present invention, a photoconductive sheet for use as a photoconductive layer in a radiation imaging panel which records an electrostatic latent image representing a radiographic image is provided. The photoconductive sheet according to the first aspect of the present invention is formed of a bismuth-mixed metal oxide Bi₁₂MO₂₀ so as to exhibit a first light reflectance at a first wavelength of 750 nm and a second light reflectance at a second wavelength of 350 nm, where M is at least one of Ge, Si, and Ti, and the first light reflectance is seven or more times greater than the second light reflectance.

In order to accomplish the second object, according to the second aspect of the present invention, a radiation imaging panel which records an electrostatic latent image representing a radiographic image is provided. The radiation imaging panel according to the second aspect of the present invention comprises a photoconductive layer formed of a bismuth-mixed metal oxide Bi₁₂MO₂₀ so as to exhibit a first light reflectance at a first wavelength of 750 nm and a second light reflectance at a second wavelength of 350 nm, where M is at least one of Ge, Si, and Ti, and the first light reflectance is seven or more times greater than the second light reflectance. Hereinafter, in this specification, it is assumed that M in Bi₁₂MO₂₀ is at least one of Ge, Si, and Ti.

In the first and second aspects of the present invention, preferably, the photoconductive layer or sheet is formed of sintered bismuth-mixed metal oxide Bi₁₂MO₂₀.

The present inventors have investigated the photoconductivity of the bismuth-mixed metal oxides Bi₁₂MO₂₀, and found that the bismuth-mixed metal oxides Bi₁₂MO₂₀ are superior in photoconductivity when the bismuth-mixed metal oxides Bi₁₂MO₂₀ exhibit high light reflectance at the wavelengths 550 to 750 nm. In particular, when a photoconductive sheet used as a photoconductive layer in a radiation imaging panel which records an electrostatic latent image representing a radiographic image is formed of a bismuth-mixed metal oxide Bi₁₂MO₂₀ (where M is at least one of Ge, Si, and Ti) so as to exhibit a first light reflectance at a first wavelength of 750 nm and a second light reflectance at a second wavelength of 350 nm, and the first light reflectance at the first wavelength of 750 nm is seven or more times greater than the second light reflectance at the second wavelength of 350 nm, the photoconductive layer can collect a great amount of X-ray charges, so that it is possible to increase the sensitivity.

Further, in the case where the bismuth-mixed metal oxide Bi₁₂MO₂₀ forming the photoconductive layer is sintered, it is possible to increase the filling factor of the bisnuuth-mixed metal oxide Bi₁₂MO₂₀ in the photoconductive layer. That is, the photoconductive layer becomes dense, so that it is possible to increase X-ray absorption efficiency. In addition, since electric charges generated in the photoconductive layer can be more effectively captured, it is possible to greatly increase the sensitivity.

### BRIEF DESCRIPTION OF THE DRAWINGS

FIG. 1 is a cross-sectional view schematically illustrating an arrangement for producing a sintered piece of Bi₁₂MO₂₀.
FIG. 2 is a schematic diagram illustrating an outline of a fihar-formation system which is used in production of the photoconductive layer according to the present invention.
FIG. 3 is a cross-sectional view schematically illustrating a radiation imaging panel having the photoconductive layer according to a first embodiment of the present invention.
FIG. 4 is a schematic diagram of a recording-and-reading system for recording an electrostatic latent image in the radiation imaging panel of FIG. 3 and reading the electrostatic latent image from the radiation imaging panel.
FIGS. 5A, 5B, 5C and 5D are diagrams illustrating electric charges in respective stages in a process for recording an electrostatic latent image in the system of FIG. 4.
FIGS. 6A, 6B, 6C and 6D are diagrams illustrating electric charges in respective stages in a process for reading an electrostatic latent image in the system of FIG. 4.
FIG. 7 is a cross-sectional view scheanatically illustrating the entire structure of a radiation imaging panel according to a second embodiment of the present invention.
FIG. 8 is a schematic cross-sectional view schematically illustrating a pixel portion of the radiation imaging panel of FIG. 7.
FIG. 9 is a circuit diagram illustrating an equivalent circuit of an AMA substrate.
FIG. 10 is a graph indicating relationships between the wavelength and the light reflectance in a concrete example of a photoconductive sheet according to the present invention and a comparison example of a photoconductive sheet.

### DESCRIPTION OF PREFERRED EMBODIMENTS

### Production Method

The present invention is characterized in that the photoconductive layer in the radiation imaging panel is made of Bi₁₂MO₂₀, and the light reflectance at the wavelength of 750 nm is seven or more times greater than the light reflectance at the wavelength of 350 nm. Since the photoconductive layer of Bi₁₂MO₂₀ has a bandgap around 3.2 eV, the photoconductive layer of Bi₁₂MO₂₀ absorbs almost all light at the wavelength of 350 nm, and almost no light at the wavelength of 750 nm. However, when Bi₁₂MO₂₀ contains impurities or lattice defects (e.g., antisite defects, vacancies, interstitial ions, or bismuth V ions), absorption at the wavelength of 750 nm also occurs. Therefore, when the light reflectance at the wavelength of 750 nm is seven or more times greater than the light reflectance at the wavelength of 350 nm, the photoconductive layer of Bi₁₂MO₂₀ can collect a great amount of X-ray charges.

The photoconductive layer of Bi₁₂MO₂₀ which exhibits a light reflectance at the wavelength of 750 nm seven or more times greater than at the wavelength of 350 nm can be produced by using high-purity raw material, or appropriately controlling the sintering conditions such as the sintering temperature, the setter, and the sintering atmosphere. Specifically, according to the first method for producing the photoconductive layer according to the present invention, the above photoconductive layer is produced through the following steps (a1) to (a4).
(a1) A precursor solution of Bi₁₂MO₂₀ is obtained by causing a reaction of a bismuth salt and a metal alkoxide under acid condition.
(a2) The precursor solution of Bi₁₂MO₂₀ is applied to a base.
(a3) The precursor solution of Bi₁₂MO₂₀ on the base is dried so as to form a film of Bi₁₂MO₂₀ or a precursor film of Bi₁₂MO₂₀.
(a4 ) The film of Bi₁₂MO₂₀ or the precursor film of Bi₁₂MO₂₀ is sintered.

Preferably, the above bismuth salt is bismuth nitrate or bismuth acetate, and the above metal alkoxide may be a germanium, silicon, or titanium alkoxide. Specifically, preferable examples of the above metal alkoxide are Ge(O-CH₃)₄, Ge(O-C₂H₅)₄, Ge(O-iC₃H₇)₄, Si(O-CH₃)₄, Si(O-C₂H₅)₄, Si(O-iC₃H₇)₄, Ti(O-CH₃)₄, Ti(O-C₂H₅)₄, and Ti(O-iC₃H₇)₄.

In step (a1), the bismuth salt and the metal alkoxide can be hydrolyzed under acid condition by using any of the known techniques as appropriate. For example, it is preferable to hydrolyze the bismuth salt and the metal alkoxide with acetic acid, a water solution of methoxyethanol and nitric acid, a water solution of ethoxyethanol and nitric acid, or the like. Although the precursor solution of Bi₁₂MO₂₀ is obtained after the hydrolysis, it is preferable to concentrate or reflux the precursor solution of Bi₁₂MO₂₀ before applying the precursor solution to the base.

In the case where the precursor solution of Bi₁₂MO₂₀ is applied to the base and sintered, the precursor film of Bi₁₂MO₂₀ is shaped into a piece to be baked, and is then placed on a setter (i.e., a base). At this time, the setter is preferably made of sintered aluminum oxide, sintered zirconium oxide, or a single crystal of aluminum oxide. When the precursor film of Bi₁₂MO₂₀ is sintered by using the above setter, it is possible to produce a sintered piece of Bi₁₂MO₂₀ without causing fusion of the sintered piece with the setter.

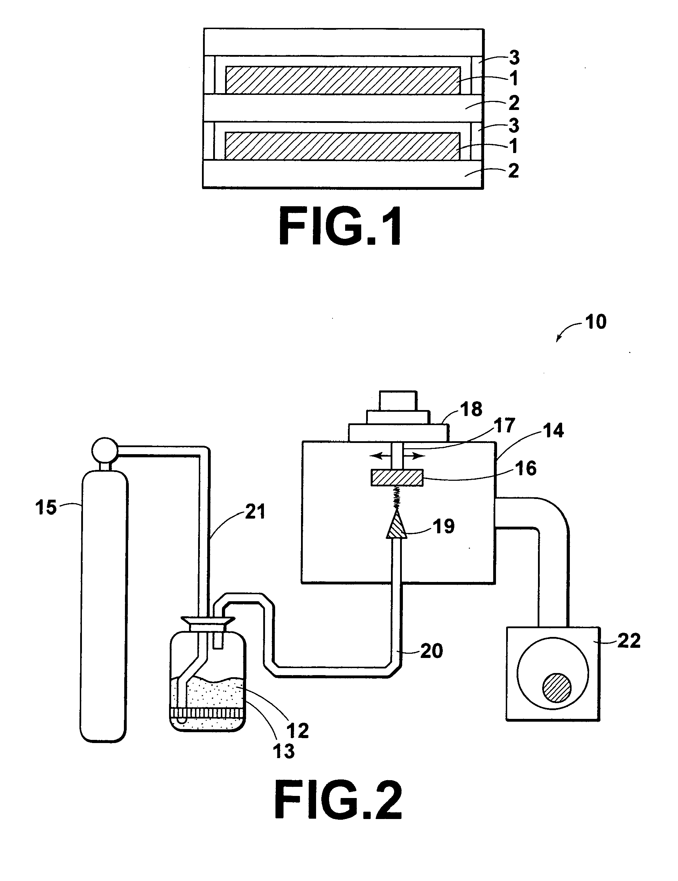

FIG. 1 is a cross-sectional view schematically illustrating an arrangement for producing the sintered piece of Bi₁₂MO₂₀. FIG. 1 shows a shelf arrangement of setters 2 for sintering pieces 1 of Bi₁₂MO₂₀. In the arrangement of FIG. 1, the setters 2 are arranged in multiple layers by using props 3 so that a shelf structure is formed, where each of the pieces 1 to be baked is placed on one of the setters 2. The pieces to be baked are planarly formed pieces of the precursor film of Bi₁₂MO₂₀. Preferably, the setters 2 are made of an oxide material such as sintered aluminum oxide, sintered zirconium oxide, or a single crystal of aluminum oxide, and contains silicon oxide of at most one weight percent. More preferably, the silicon oxide content in the setters 2 should not exceed 0.3 weight percent.

The props 3 are arranged between the setters 2, and arrayed near the edges of the setters 2 at predetermined intervals. The pieces 1 to be baked are placed inside the array of the props 3. In addition, it is possible to place a weight plate on each of the pieces 1 to be baked, during the sintering. In most cases, it is preferable that the sintering temperature be 800°C to 900°C . (However, since the sintering temperature depends on the types of the setters 2 and the pieces 1 to be baked, the combination of the setters 2 and the pieces 1 to be baked, and the like, in some exceptional cases, the sintering temperature in the above range may not be appropriate.) When sintering is performed at high temperature as above by using setters made of platinum material, which are normally used in sintering, the setters and the pieces 1 of Bi₁₂MO₂₀ are fused, so that it is impossible to obtain the pieces 1 of Bi₁₂MO₂₀. However, when the setters 2 made of the aforementioned oxide material is used in the sintering, it is possible to form the pieces 1 of Bi₁₂MO₂₀ without causing fusion of the sintered pieces 1 of Bi₁₂MO₂₀ with the setters.

Alternatively, the photoconductive layer according to the present invention may be produced by other methods. The second method for producing the photoconductive layer according to the present invention uses aerosol deposition (AD), and includes the following steps (b1) and (b2).
(b1) Bi₁₂MO₂₀ powder which is prepared in advance is stirred up in a vacuum by carrier gas.
(b2) The Bi₁₂MO₂₀ powder is deposited on a support by blowing the carrier gas in which the Bi₁₂MO₂₀ powder is mixed, on the support placed in the vacuum.

The third method for producing the photoconductive layer according to the present invention uses press sintering, and includes the following steps (c1) and (c2).
(c1) A Bi₁₂MO₂₀ film is formed out of Bi₁₂MO₂₀ powder by applying high pressure to the Bi₁₂MO₂₀ powder by use of a pressing machine.
(c2) The Bi₁₂MO₂₀ film is sintered.

The fourth method for producing the photoconductive layer according to the present invention includes the following steps (d1) and (d2).
(d1) A green sheet is produced by application of Bi₁₂MO₂₀ powder by use of a binder, where the green sheet is a sheet containing the Bi₁₂MO₂₀ powder and the binder.
(d2) The green sheet is baked so as to remove the binder in the green sheet and sinter the Bi₁₂MO₂₀ in the green sheet.

Hereinafter the above technique using the green sheet is referred to as the green-sheet technique.

For example, the Bi₁₂MO₂₀ powder used in the above second to fourth methods can be prepared in each of the following (first and second) processes. The first process for producing the Bi₁₂MO₂₀ powder includes the following steps (e1) to (e3).
(e1) The precursor solution of Bi₁₂MO₂₀ is obtained by hydrolyzing the bismuth salt and the metal alkoxide with acetic acid.
(e2) A precursor gel of Bi₁₂MO₂₀ is obtained by concentrating the above precursor solution of Bi₁₂MO₂₀·
(e3) The Bi₁₂MO₂₀ powder is obtained by baking the above precursor gel of Bi₁₂MO₂₀.

The second process for producing the Bi₁₂MO₂₀ powder includes the following steps (f1) and (f2).
(f1) The bismuth oxide (Bi₂O₃) and MO₂ (i.e., at least one of silicon oxide, germanium oxide, and titanium oxide) are mixed.
(f2) The Bi₁₂MO₂₀ powder is obtained by solid-phase reaction, which is caused by prebaking the above mixture, for example, at 800°C .

Although the binder is used in the green-sheet technique, the binder is completely removed by sintering, so that no binder remains in the sintered piece of Bi₁₂MO₂₀. Preferable examples of the binder used in the green-sheet technique are cellulose acetate, poly(alkyl methacrylate), poly(vinyl alcohol), and poly(vinyl butyral).

The aforementioned examples of the bismuth salt and the metal alkoxide which are preferable for the first method for producing the photoconductive layer according to the present invention are also preferable for the second to fourth methods for producing the photoconductive layer. In addition, the aforementioned manner for hydrolyzing the bismuth salt and the metal alkoxide which is preferable for the first method for producing the photoconductive layer is also preferable for the first process for producing the Bi₁₂MO₂₀ powder.

Alternatively, the Bi₁₂MO₂₀ powder used in the second method for producing the photoconductive layer according to the present invention may be obtained through the following steps (g1) and (g2).
(g1) A precursor solution of Bi₁₂MO₂₀ is obtained by causing a reaction of a bismuth alkoxide and a metal alkoxide under alkaline condition.
(g2) The Bi₁₂MO₂₀ powder is obtained by crystallizing the precursor solution of Bi₁₂MO₂₀ in a liquid phase.

Preferable examples of the above bismuth alkoxide are Bi(O-CH₃)₃, Bi(O-C₂H₅)₃, Bi (O-iC₃H₇)₃. In addition, the aforementioned examples of the metal alkoxide which are preferable for the first method for producing the photoconductive layer according to the present invention are also preferable for use in step (g1) in the above process for producing the Bi₁₂MO₂₀ powder. Further, in the above step (g2), the bismuth alkoxide and the metal alkoxide can be hydrolyzed under alkaline condition by appropriately using any of the known techniques. For example, it is preferable to hydrolyze the bismuth alkoxide and the metal alkoxide with sodium hydroxide, potassium hydroxide, or the like.

The aerosol deposition (AD) used in the second method for producing the photoconductive layer according to the present invention is a technique for forming a film or sheet by preparing fine or ultrafine particles as raw material in advance, mixing the fine or ultrafine particles with carrier gas, aerosolizing the mixture, and spraying the aerosolized mixture onto a substrate through a nozzle. Details of the aerosol deposition used in the second method for producing the photoconductive layer according to the present invention are explained below with reference to FIG. 2. FIG. 2 schematically shows a film-formation system which is arranged for performing aerosol deposition and can be used in production of the photoconductive layer according to the present invention.

The film-formation system 10 illustrated in FIG. 2 comprises an aerosolizing chamber 13, a film-formation chamber 14, a high-pressure gas cylinder 15, first piping 20, second piping 21, and a vacuum pump 22. Bi₁₂MO₂₀ particles 12 (as raw material) and carrier gas are agitated and mixed in the aerosolizing chamber 13, and films or sheets are formed In the deposition chamber 14. The high-pressure gas cylinder 15 contains the carrier gas. The film-formation chamber 14 comprises a substrate holder 17, an XYZθ stage 18, and a nozzle 19. In the film-formation chamber 14, a substrate 16, on which the Bi₁₂MO₂₀ particles 12 are to be deposited, is held by the substrate holder 17. The XYZθ stage 18 is arranged for three-dimensionally moving the substrate holder 17 in the x, y, and z directions, and rotating the substrate holder 17 by an angle θ . The nozzle 19 has a small opening for spraying the Bi₁₂MO₂₀ particles 12 onto the substrate 16. The first piping 20 connects the aerosolizing chamber 13 and the nozzle 19 in the film-formation chamber 14, the second piping 21 connects the high-pressure gas cylinder 15 and the aerosolizing chamber 13, and the vacuum pump 22 evacuates the deposition chamber 14.

A film or sheet of the Bi₁₂MO₂₀ particles 12 is formed on the substrate 16 through the following steps.
(h1) The aerosolizing chamber 13 is partially filled with Bi₁₂MO₂₀ particles 12 (as raw material), which have dimensions of 0.1 to 2 micrometers.
(h2) The carrier gas is introduced from the high-pressure gas cylinder 15 through the second piping 21 to the aerosolizing chamber 13, so that the Bi₁₂MO₂₀ particles 12 in the aerosolizing chamber 13 are agitated and aerosolized.
(h3) The aerosolized Bi₁₂MO₂₀ particles 12 pass through the first piping 20, and sprayed by the nozzle 19 onto the substrate 16 in the film-formation chamber 14, so that the Bi₁₂MO₂₀ film or sheet is formed on the substrate 16.

During the above operations, the film-formation chamber 14 is evacuated by the vacuum pump 22, and the degree of vacuum in the deposition chamber 14 is adjusted as necessary. Since the substrate 16 can be three-dimensionally moved by the XYZθ stage 18, it is possible to form a film or sheet of the Bi₁₂MO₂₀ particles 12 having a desired thickness in a desired area on the substrate 16.

It is preferable that the raw material are preferably powder of the Bi₁₂MO₂₀ having the number average diameter of approximately 0.1 to 10 micrometers. It is more preferable that 50 or more weight percent of the Bi₁₂MO₂₀ particles have diameters of 0.1 to 2 micrometers, where the diameters of the particles mean the diameters of the spheres having identical volumes to the particles.

The aerosolized Bi₁₂MO₂₀ particles can be readily accelerated to the flow velocity of 2 to 300 m/second by making the aerosolized Bi₁₂MO₂₀ particles pass through the nozzle 19 having the opening as small as 6 mm² or less. Therefore, it is possible to deposit the Bi₁₂MO₂₀ particles on the substrate by making the Bi₁₂MO₂₀ particles collide against the substrate with the aid of the carrier gas. The Bi₁₂MO₂₀ particles which collide with the substrate or Bi₁₂MO₂₀ particles already deposited on the substrate are joined to the substrate or Bi₁₂MO₂₀ particles already deposited on the substrate due to the impact of the collision, so that it is possible to form a dense film or sheet of Bi₁₂MO₂₀ on the substrate. Although the temperature of the substrate during the deposition of the Bi₁₂MO₂₀ particles may be room temperature, it is possible to form a denser film or sheet when the temperature of the substrate is controlled at 100°C to 300°C.

The thickness of the photoconductive layer is preferably 10 to 800 micrometers, and more preferably 50 to 600 micrometers. If the thickness of the photoconductive layer is smaller than 10 micrometers, the X-ray absorption efficiency decreases, so that the sensitivity cannot be increased. On the other hand, if the thickness of the photoconductive layer is greater than 800 micrometers, the X-ray absorption efficiency saturates, i.e., does not further increase, and electric charges generated in the photoconductive layer are required to move a long distance until the electric charges reach an electrode so that a considerable portion of the electric charges are trapped on the way to the electrode and lose their activity. That is, when the photoconductive layer is too thick, the charge-collection efficiency is lowered, and the quality of images deteriorates.

### Radiation Imaging Panel I

There are two types of radiation imaging panels. One is the direct-conversion type, which directly converts radiation into electric charges and accumulates the electric charges. The other is the indirect conversion type, which converts radiation into light with a scintillator such as CsI, further converts the light into electric charges with a-Si (amorphous silicon) photodiodes, and accumulates the electric charges. The photoconductive layer according to the present invention can be used in the radiation imaging panels of the direct-conversion types, and is sensitive to radiation including X-rays, gamma rays, alpha rays, and the like.

Further, the photoconductive layer according to the present invention can be used in each of the so-called optical reading system and the TFT reading system. In the optical reading system, image information is read by use of a radiation image detector which uses semiconductor material and generates electric charges in response to irradiation of light. In the TFT reading system, electric charges generated by exposure to radiation are accumulated and the accumulated electric charges are read out by turning on and off electric switches (such as thin-film transistors (TFTs)) on a pixel-by-pixel basis.

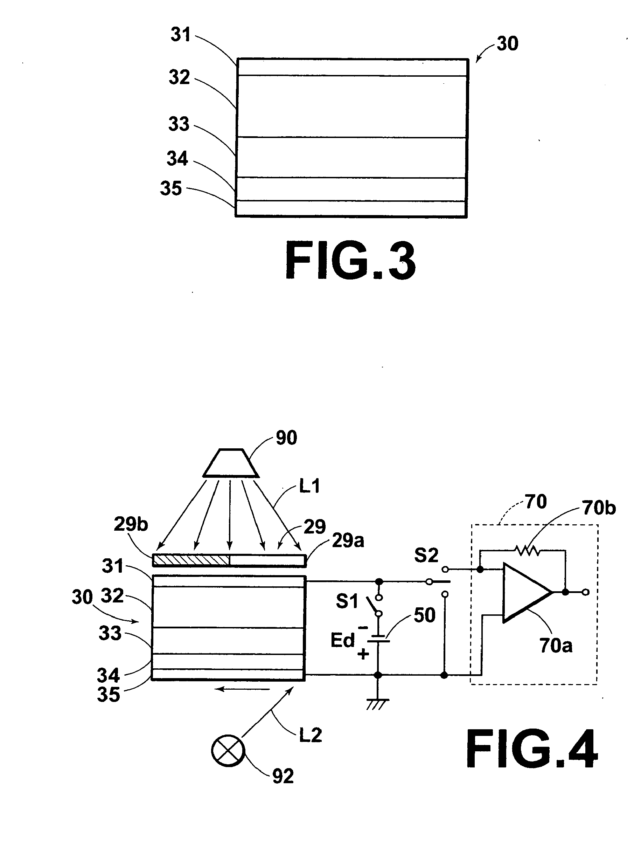

First, a radiation imaging panel for use with the optical reading system is explained as a first embodiment of the present invention with reference to FIG. 3, which schematically shows a cross section of the radiation imaging panel (having the photoconductive layer) according to the first embodiment of the present invention.

The radiation imaging panel 30 of FIG. 3 is constituted by forming a first transparent conductive layer 31, a recording radioconductive layer 32, a charge-transport layer 33, a reading photoconductive layer 34, and a second transparent conductive layer 35 in this order. The first transparent conductive layer 31 is transparent to radiation L1 for recording (which is explained later). The recording radioconductive layer 32 becomes conductive in response to exposure to the radiation L1 which has passed through the first transparent conductive layer 31. The charge-transport layer 33 substantially behaves as an insulator against first electric charges with which the first transparent conductive layer 31 is electrified (e.g., latent-image polarity charges, for example, the negative charges), and substantially behaves as a conductor of second electric charges having a polarity opposite to the first electric charges (transport polarity charges, for example, the positive charges in the case where the latent-image polarity is negative). The photoconductive layer 34 becomes conductive in response to exposure to the light L2 for reading (which is explained later, and is hereinafter referred to as the reading light L2). The second transparent conductive layer 35 is transparent to the reading light L2.

For example, the films or sheets formed by uniformly applying conductive material to a transparent glass plate (e.g., NESA films) are suitable for the first and second transparent conductive layers 31 and 35.

In addition, it is more desirable that the charge-transport layer 33 have a greater difference in mobility between the transport polarity charges and the latent-image polarity charges. For example, the following materials (a) to (c) are suitable for the charge-transport layer 33.
(a) Organic materials such as poly(N-vinylcarbazole) (PVK), N,N'-diphenyl-N,N'-bis(3-methylphenyl)-(1,1'-diphenyl)-4,4'-dia mine (TPD), or discotic liquid crystal
(b) Polymers (such as polycarbonate, polystyrene, or PVK) in which TPD is dispersed
(c) Semiconductor materials such as a-Se doped with 10 to 200 ppm Cl.
The above organic compounds (such as PVK, TPD, or discotic liquid crystal) are particularly preferable for the charge-transport layer 33 since such organic compounds exhibit light insensitivity. Moreover, since the above organic compounds generally have a small dielectric constant, the capacitance between the recording radioconductive layer 32 and the reading photoconductive layer 34 is small. Therefore, it is possible to increase the efficiency in reading out signals.

Photoconductive materials which contain, as one or more main components, at least one of a-Se, Se-Te, Se-As-Te, metal-free phthalocyanine, metal phthalocyanine, magnesium phthalocyanine (MgPc), the phase II type of vanadyl phthalocyanine (VOPc), copper phthalocyanine (CuPc), and the like are preferable for the reading photoconductive layer 34.

The photoconductive layer according to the present invention is used as the recording radioconductive layer 32 in the above radiation imaging panel.

### Optical Reading System

Hereinbelow, a system for reading an electrostatic latent image by use of light is briefly explained. FIG. 4 schematically shows a recording-and-reading system for recording an electrostatic latent image in the radiation imaging panel 30 (according to the first embodiment) and reading the electrostatic latent image from the radiation imaging panel 30. That is, both of a system for recording an electrostatic latent image and a system for reading the electrostatic latent image from the radiation imaging panel 30 are integrated in the recording-and-reading system of FIG. 4.

The recording-and-reading system of FIG. 4 comprises the radiation imaging panel 30, a recording irradiation unit 90, a power supply 50, a current detecting unit 70, a reading irradiation unit 92, and switches S1 and S2. The power supply 50, the recording irradiation unit 90, and the switch S1 are used for recording an electrostatic latent image in the radiation imaging panel 30, and the current detecting unit 70 and the switch S2 are used for reading an electrostatic latent image from the radiation imaging panel 30.

The first transparent conductive layer 31 in the radiation imaging panel 30 is connected to the negative terminal of the power supply 50 through the switch S1, and to the input terminal of the switch S2. One of the output terminals of the switch S2 is connected to one input terminal of the current detecting unit 70. The other input terminal of the current detecting unit 70, the second transparent conductive layer 35 of the radiation imaging panel 30, the positive terminal of the power supply 50, and the other of the output terminals of the switch S2 are grounded. The current detecting unit 70 comprises a detection amplifier 70a (realized by an operational amplifier) and a feedback resistor 70b, and realizes a so-called current-to voltage conversion circuit.

A subject (or an object) 29 to be examined is placed above the upper surface of the first transparent conductive layer 31. The subject 29 to be examined includes one or more transparent portions 29a transparent to the radiation L1 (for recording) and one or more (radiation-blocking) portions 29b which block (not transparent to) the radiation L1. The recording irradiation means 90 uniformly irradiates the subject 29 with the radiation L1. The reading irradiation unit 92 scans the solid-state radiographic image detector 10 with the reading light L2 in the direction indicated by the horizontal arrow in FIG. 4. The reading light L2 is, for example, infrared light, electroluminescence (EL), or other light emitted from a light-emitting diode. Preferably, the reading light L2 is converged so as to have a small diameter.

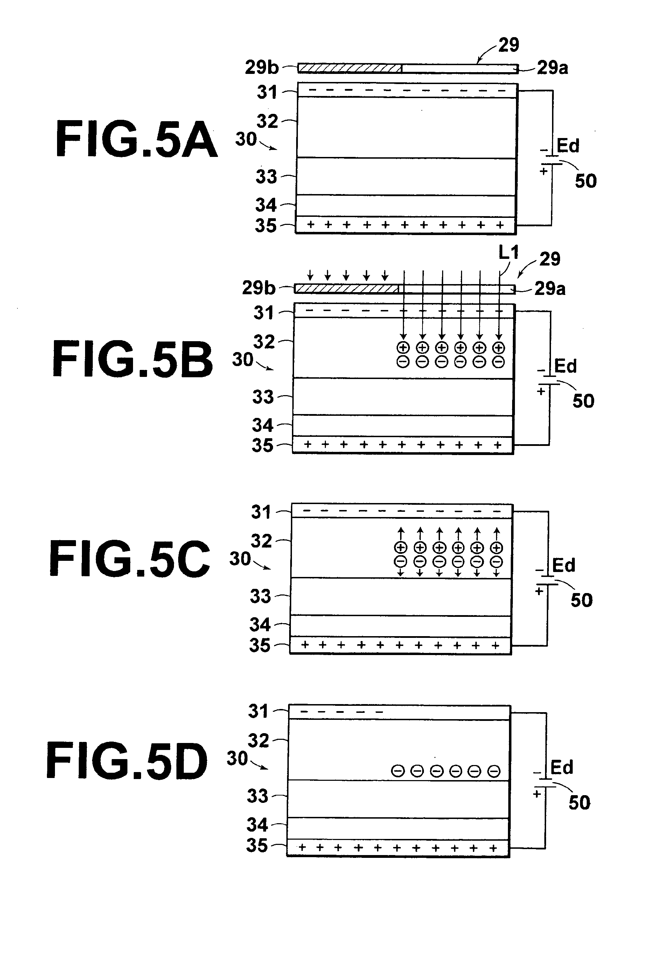

A process of recording an electrostatic latent image in the above recording-and-reading system of FIG. 4 is explained below with reference to FIGS. 5A, 5B, 5C and 5D, which schematically indicate electric charges in respective stages in the process for recording an electrostatic latent image in the recording-and-reading system of FIG. 4.

First, the switch S2 is held opened so that the first transparent conductive layer 31 is connected to neither of the ground and the current detecting unit 70, and the switch S1 is turned on, so that a DC voltage Ed is applied by the power supply 50 between the first and second transparent conductive layers 31 and 35. Thus, the first transparent conductive layer 31 is electrified with negative electric charges from the power supply 50, and the second transparent conductive layer 35 is electrified with positive electric charges from the power supply 50, as illustrated in FIG. 5A, so that a parallel electric field is applied between the first transparent conductive layer 31 and the second transparent conductive layer 35 in the radiation imaging panel 30.

Next, the recording irradiation unit 90 uniformly irradiates the subject 29 (to be examined) with the radiation L1 (for recording). The radiation L1 passes through the one or more transparent portions 29a of the subject 29 and the first transparent conductive layer 31, so that one or more portions of the recording radioconductive layer 32 are irradiated with the radiation L1, and become conductive. At this time, it is possible to deem each portion of the recording radioconductive layer 32 to behave as a variable resistor which exhibits electric resistance corresponding to the exposure dose of the radiation L1 in the portion of the recording radioconductive layer 32. The electric resistance in each portion of the recording radioconductive layer 32 depends on the amount of pairs of electrons (negative charges) and holes (positive charges) generated by the radiation L1 in the portion of the recording radioconductive layer 32 as illustrated in FIG. 5B. When the exposure dose of the radiation L1 in each portion of the recording radioconductive layer 32 is low, the electric resistance in the portion of the recording radioconductive layer 32 is high. In FIGS. 5B, 5C, and 5D, the encircled symbols "+" indicate the positive charges generated by the radiation L1, and the encircled symbols "-" indicate the negative charges generated by the radiation L1.

The positive charges generated in the radioconductive layer 32 move fast through the radioconductive layer 32 to the first transparent conductive layer 31, recombine with a portion of the negative charges with which the first transparent conductive layer 31 is electrified, at the interface between the first transparent conductive layer 31 and the radioconductive layer 32, and disappear (as illustrated in FIGS. 5C and 5D). On the other hand, the negative charges generated in the radioconductive layer 32 move through the radioconductive layer 32 to the charge transport layer 33. Since the charge transport layer 33 behaves as an insulator against the electric charges of the same polarity as the electric charge with which the first transparent conductive layer 31 is electrified (i.e., the negative charges in this case), the negative charges which have moved through the radioconductive layer 32 stop at the interface between the radioconductive layer 32 and the charge transport layer 33, and are accumulated at the interface (as illustrated in FIGS. 5C and 5D). The amount of the accumulated electric charges is determined by the amount of the negative charges generated in the radioconductive layer 32, i.e., the exposure dose of the radiation L1 which has passed through the subject 29.

On the other hand, since the radiation L1 does not pass through the one or more (radiation-blocking) portions 29b of the subject 29, no change occurs in the portions of the radiation imaging panel 30 below the one or more (radiation-blocking) portions 29b (as illustrated in FIGS. 5B to 5D). Therefore, it is possible to accumulate a distribution of electric charges representing an image of the subject 29 by irradiating the subject 29 with the radiation L1, and the image represented by the distribution of electric charges is called the electrostatic latent image.

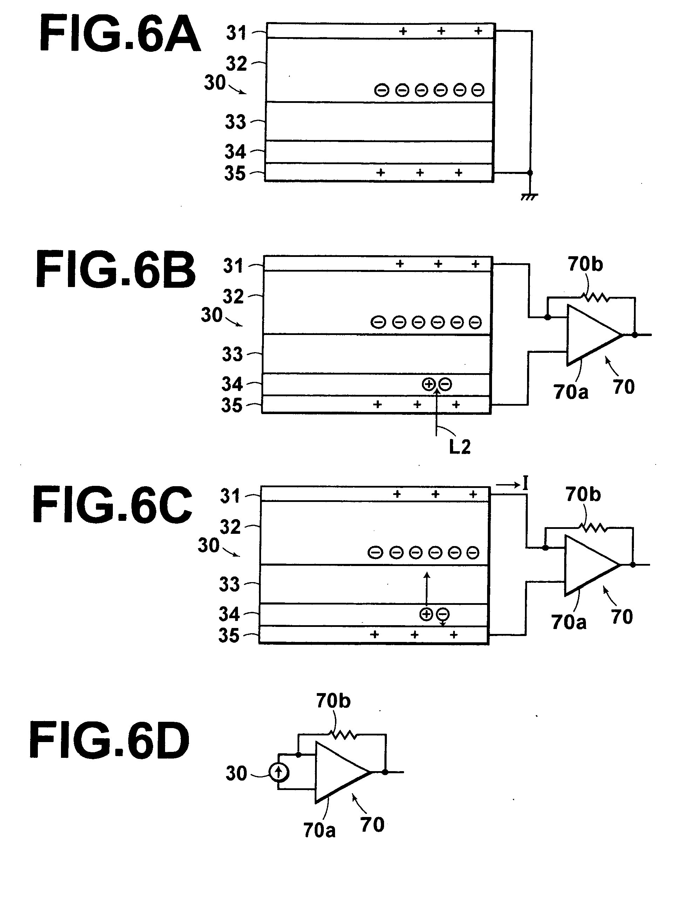

Next, a process of reading an electrostatic latent image in the above recording-and-reading system of FIG. 4 is explained below with reference to FIGS. 6A, 6B, 6C and 6D, which schematically indicate electric charges in respective stages in the process for reading an electrostatic latent image in the recording-and-reading system of FIG. 4.

First, the switch S1 is held open in order to stop the electric power supply, and the switch S2 is turned so as to temporarily ground the first transparent conductive layer 31. Thus, electric charges move between the first transparent conductive layer 31 and the second transparent conductive layer 35 in the radiation imaging panel 30 in which an electrostatic latent image is recorded, and the electric charges are rearranged so that the first transparent conductive layer 31 and the second transparent conductive layer 35 are held at identical electric potential as illustrated in FIG. 6A. Thereafter, the switch S2 is turned so that the first transparent conductive layer 31 is connected to the one input terminal of the current detecting unit 70 mentioned before.

Then, the second transparent conductive layer side of the radiation imaging panel 30 is scanned with the reading light L2, so that the reading light L2 passes through the second transparent conductive layer 35, and the scanned portion of the photoconductive layer 34 is exposed to the reading light L2. At this time, pairs of electrons (negative charges) and holes (positive charges) are generated in the scanned portion of the photoconductive layer 34 by the reading light L2 as illustrated in FIG. 6B, and the generation of pairs of electrons and holes in the scanned portion of the photoconductive layer 34 makes the scanned portion of the photoconductive layer 34 conductive. In FIGS. 6A, 6B, and 6C, similar to FIGS. 5B, 5C, and 5D, the encircled symbols "+" indicate the positive charges generated by the reading light L2, and the encircled symbols "-" indicate the negative charges generated by the reading light L2.

Since the charge-transport layer 33 behaves as a conductor of the positive charges, when a portion of the photoconductive layer 34 is scanned with the reading light L2, and negative electric charges are accumulated right above the scanned portion of the photoconductive layer 34 at the interface between the charge-transport layer 33 and the recording radioconductive layer 32, the positive charges generated in the photoconductive layer 34 are attracted by the accumulated negative electric charges, and move fast through the charge transport layer 33 to the interface between the recording conductive layer 34 and the charge-transport layer 33 as illustrated in FIG. 6C, so that the positive charges generated in the photoconductive layer 34 recombine with the accumulated negative electric charges at the interface, and the positive charges and the accumulated negative electric charges disappear. At the same time, the negative charges generated in the photoconductive layer 34 recombine with the positive charges at the second transparent conductive layer 35 and disappear as illustrated in FIG. 6C. The amount of the reading light L2 to which the photoconductive layer 34 is exposed is sufficient to generate the amount of positive charges which can recombine with all the accumulated negative electric charges. Therefore, when the entire photoconductive layer 34 is scanned with the reading light L2, all the electric charges accumulated at the interface between the charge-transport layer 33 and the recording radioconductive layer 32 vanish. Since the above movement and recombination of the electric charges in the radiation imaging panel 30 correspond to flow of electric current I through the radiation imaging panel 30, the arrangement of the radiation imaging panel 30 and the current detecting unit 70 can be indicated by an equivalent circuit as illustrated in FIG. 6D, where the radiation imaging panel 30 corresponds to the current source, and the output current of the current source depends on the accumulated electric charges.

As explained above, when the electric current flowing out of the radiation imaging panel 30 is detected while scanning the photoconductive layer 34 with the reading light L2, it is possible to sequentially read out the electric charges accumulated above each portion (corresponding to a pixel) of the photoconductive layer 34 in the radiation imaging panel 30 which is exposed to the reading light L2. Thus, the entire electrostatic latent image can be read out from the radiation imaging panel 30.

The above operations for detecting a radiation image by using the optical reading system are also disclosed in, for example, Japanese Unexamined Patent Publication No. 2000-105297.

### Radiation Imaging Panel II

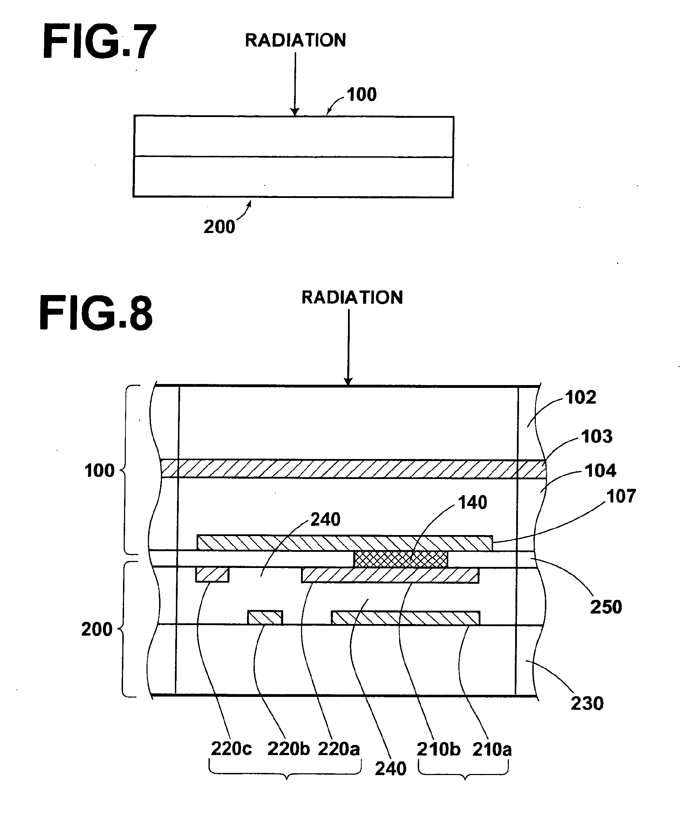

Hereinbelow, a radiation imaging panel for use with the TFT reading system is explained as a second embodiment of the present invention with reference to FIGS. 7 and 8. FIG. 7 schematically shows a cross section of the entire radiation imaging panel according to the second embodiment of the present invention, and FIG. 8 schematically shows a cross section of a pixel portion of the radiation imaging panel of FIG. 7. As illustrated in FIG. 7, the radiation imaging panel according to the second embodiment has a structure in which a radiation detector unit 100 and an active-matrix-array (AMA) substrate 200 are joined. As illustrated in FIG. 8, the radiation detector unit 100 has a basic structure in which a common electrode 103, a photoconductive layer 104, and a detection electrode 107 are laminated. Radiation is applied from the common electrode side. The common electrode 103 is provided for applying a bias voltage, and the photoconductive layer 104 generates charge carriers (electron-hole pairs) in response to exposure to the radiation to be detected. The detection electrode 107 is provided for collecting the carriers. In addition, it is possible to further laminate a support 102 on the upper side of the common electrode 103.

The photoconductive layer 104 is the photoconductive layer according to the present invention. The common electrode 103 and the detection electrode 107 are made of conductive material such as indium tin oxide (ITO), gold (Au), or platinum (Pt). Further, according to the polarity of the bias voltage, a hole-injection-blocking layer or an electron-injection-blocking layer may be provided with the common electrode 103 and/or the detection electrode 107.

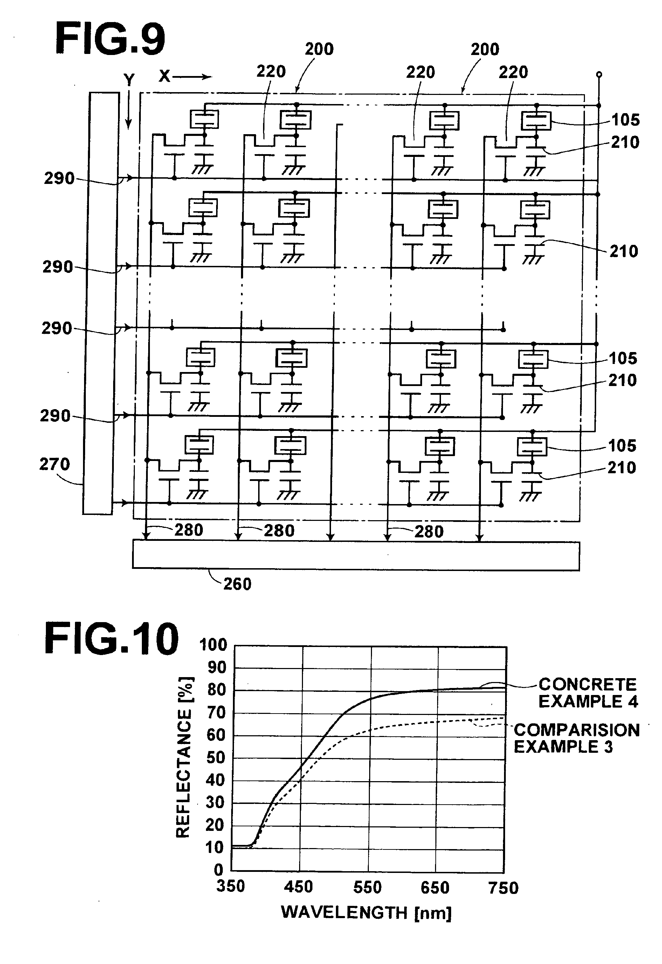

Details of the AMA substrate 200 are explained below with reference to FIG. 9, which is a circuit diagram showing an equivalent circuit of the AMA substrate 200. In FIG. 9, portions of the radiation detector unit 100 respectively corresponding to the pixels are indicated as radiation-detection portions 105. For example, the radiation-detection portions 105 are placed on the support 102. The number and the arrangement of the radiation-detection portions 105 are determined as necessary. For example, the radiation-detection portions 105 are two-dimensionally arrayed in a matrix arrangement, and 1,000 to 3,000 radiation-detection portions are arrayed in each of the vertical and horizontal directions. As illustrated in FIG. 9, in the AMA substrate 200, a capacitor 210 (as a charge-accumulation capacitor) and a thin-film transistor (TFT) 220 (as a switch element) are provided with each of the radiation-detection portions 105. In the AMA substrate 200, the capacitors 210 and the thin-film transistors (TFT) 220 are also two-dimensionally arrayed in a matrix arrangement corresponding to the above arrangement of the radiation-detection portions 105. Electric charges generated in the photoconductive layer are accumulated in the capacitors 210, so that a distribution of electric charges corresponding to the electrostatic latent image in the optical reading system is formed in the (charge-accumulation) capacitors 210.

Next, details of the structures of the capacitors 210 and the TFTs 220 in the AMA substrate 200 are explained below with reference to FIG. 8. In the structure of FIG. 8, the AMA-substrate support 230 is made of an insulator. The ground-side electrodes 210a of the capacitors 210 and the gate electrodes 220b of the TFTs 220 are formed on the surface of the AMA-substrate support 230, an insulation film 240 is formed over the ground-side electrodes 210a of the capacitors 210 and the gate electrodes 220b of the TFTs 220, and the connection-side electrodes 210b of the capacitors 210 and the source electrodes 220a and the drain electrodes 220c of the TFTs 220 are formed on the insulation film 240 and covered by the insulation film 250, which is arranged for protection. The source electrode 220a of the TFT 220 and the connection-side electrode 210b of the capacitor 210 corresponding to each of the radiation-detection portions 105 are integrally and simultaneously formed. The insulation film 240 has the functions of the capacitor insulators of the capacitors 210 and the gate insulators of the TFTs 220, and can be realized by, for example, a plasma SiN film. The AMA substrate 200 can be manufactured by using the thin-film formation technology and the fine processing technology which are used in the manufacture of the substrates of the liquid crystal display devices.

The radiation detecting part 100 and the AMA substrate 200 are joined as follows.

An anisotropic conductive film (ACF) containing conductive particles such as silver particles and exhibiting conductivity in only the thickness direction is sandwiched between the radiation detector unit 100 and the AMA substrate 200, and the radiation detector unit 100 and the AMA substrate 200 are bonded together by heating and pressing so that the positions of the detection electrodes 107 and the connection-side electrodes 210b are aligned. When the radiation detector unit 100 and the AMA substrate 200 are mechanically joined as above, the detection electrodes 107 are electrically connected to the corresponding connection-side electrodes 210b through a conductor 140 interposed between the detection electrodes 107 and the corresponding connection-side electrode 210b.

Further, a reading driver circuit 260 and a gate driver circuit 270 are provided with the AMA substrate 200. As illustrated in FIG. 9, the reading driver circuit 260 is connected to vertical read lines (read address lines) 280 arranged in the Y direction, and the gate driver circuit 270 is connected to horizontal read lines (gate address lines) 290 arranged in the X direction. Each of the vertical read lines 280 connects the drain electrodes of ones of the TFTs 220 arrayed in one column, and each of the horizontal read lines 290 connects the gate electrodes of ones of the TFTs 220 arrayed in one row. Although not shown, a preamplifier (charge-to-voltage converter) is connected to each of the vertical read lines 280 in the reading driver circuit 260. As explained above, the reading driver circuit 260 and the gate driver circuit 270 are connected to the AMA substrate 200. Alternatively, the reading driver circuit 260 and the gate driver circuit 270 may be integrally formed in the AMA substrate 200 in order to realize high-density packing.

The above operations for detecting a radiation image by using the above radiation imaging panel in which the radiation detector unit 100 and the AMA substrate 200 are joined are also disclosed in, for example, Japanese Unexamined Patent Publication No. 11-287862.

### CONCRETE EXAMPLES OF THE PRESENT INVENTION

The present inventors have produced concrete examples of the photoconductive sheet according to the present invention and some comparison examples as indicated below.

### Concrete Example 1

A photoconductive sheet of sintered Bi₁₂TiO₂₀ has been produced as a concrete example 1 of the photoconductive sheet according to the present invention in accordance with the following procedure.

Bismuth oxide (Bi₂O₃) powder of the purity of 4N (four nines) and titanium oxide (TiO₂) powder of the purity of 4N are mixed at the 12:1 molar ratio of Bi to Ti, and the mixture further undergoes ball-mill mixing using zirconium oxide balls in ethanol. The Bismuth oxide powder and the titanium oxide powder as above are manufactured by Kojundo Chemical Lab. Co., Ltd. (Japan). Thereafter, the mixture is collected, dried, and prebaked at 800°C for 6 hours, so that solid-phase reaction occurs between the bismuth oxide and the silicon oxide, and Bi₁₂TiO₂₀ powder is produced. Subsequently, the Bi₁₂TiO₂₀ powder is coarsely pulverized in a mortar so that the particle diameters of the Bi₁₂TiO₂₀ powder become 150 micrometers or less, and is further pulverized and dispersed in ethanol by use of a ball mill using zirconium oxide balls. Then, the Bi₁₂TiO₂₀ powder is shaped into a sheet by applying pressure of 50 MPa with a pressing machine manufactured by NPa system Co., Ltd. (Japan). The shaped film is placed on a sapphire setter, and sintered for 2 hours at 840°C in a N2 atmosphere, so that a sintered sheet of Bi₁₂TiO₂₀ having a thickness of 500 micrometers is produced.

### Concrete Example 2

A photoconductive sheet (of sintered Bi₁₂TiO₂₀) has been produced as a concrete example 2 of the photoconductive sheet according to the present invention in accordance with a procedure which is different from the procedure used in the production of the concrete example 1 only in that the molded film is sintered in an Ar atmosphere instead of in the N2 atmosphere.

### Concrete Example 3

A photoconductive sheet (of sintered Bi₁₂TiO₂₀) has been produced as a concrete example 3 of the photoconductive sheet according to the present invention in accordance with a procedure which is different from the procedure used in the production of the concrete example 1 only in that the purity of the bismuth oxide (Bi₂O₃) powder is 6N (six nines) instead of 4N. The Bismuth oxide powder of the purity of 6N is also manufactured by Kojundo Chemical Lab. Co., Ltd. (Japan).

### Concrete Example 4

A photoconductive sheet (of sintered Bi₁₂TiO₂₀) has been produced as a concrete example 4 of the photoconductive sheet according to the present invention in accordance with a procedure which is different from the procedure used in the production of the concrete example 2 only in that the purity of the bismuth oxide (Bi₂O₃) powder is 6N (six nines) instead of 4N.

### Concrete Example 5

A photoconductive sheet (of sintered Bi₁₂TiO₂₀) has been produced as a concrete example 5 of the photoconductive sheet according to the present invention in accordance with the following procedure by using the prebaked and pulverized powder obtained in the process for production of the concrete example 4.

First, 3.7 weight percent of poly(vinyl butyral) (PVB) as a binder and 0.8 weight percent of dioctyl phthalate as a plasticizer are added to the prebaked and pulverized powder of Bi₁₂TiO₂₀ obtained in the process for production of the concrete example 4. Then, the pulverization and mixing in the ball mill are continued so as to produce slurry for forming a sheet. Thereafter, the slurry is collected, and undergoes a vacuum degassing treatment for degassing, concentration, and viscosity adjustment. Subsequently, the slurry is applied to a film base by using a coater so that the slurry is shaped into a sheet. Before the application of the slurry, a releasing agent is applied to the film base. Next, the slurry applied to the film base is dried by leaving it at room temperature for 24 hours, and is then stripped from the film base. Then, the sheet stripped from the film base undergoes a binder removal treatment at 640°C in air. Thereafter, the sheet is placed on a single crystal of sapphire, and sintered at 840°C in an Ar atmosphere. Thus, the photoconductive sheet of sintered Bi₁₂TiO₂₀ is produced.

### Concrete Example 6

A photoconductive sheet of sintered Bi₁₂SiO₂₀ has been produced as a concrete example 6 of the photoconductive sheet according to the present invention in accordance with a procedure which is different from the procedure used in the production of the concrete example 4 only in that the titanium oxide (TiO₂) powder of the purity of 4N is replaced with silicon oxide (SiO₂) powder of the purity of 6N (manufactured by Fuso Chemical Co., Ltd., Japan), and the sintering temperature is changed to 850°C.

### Concrete Example 7

A photoconductive sheet of sintered Bi₁₂GeO₂₀ has been produced as a concrete example 7 of the photoconductive sheet according to the present invention in accordance with a procedure which is different from the procedure used in the production of the concrete example 4 only in that the titanium oxide (TiO₂) powder of the purity of 4N is replaced with germanium oxide (GeO₂) powder of the purity of 6N (manufactured by Furuuchi Chemical Corporation, Japan), and the sintering temperature is changed to 870°C.

### Comparison Example 1

A photoconductive sheet of sintered Bi₁₂TiO₂₀ has been produced as a comparison example 1 in accordance with a procedure which is different from the procedure used in the production of the concrete example 1 only in that the sapphire setter is replaced with a setter of sintered aluminum oxide.

### Comparison Example 2

A photoconductive sheet of sintered Bi₁₂TiO₂₀ has been produced as a comparison example 2 in accordance with a procedure which is different from the procedure used in the production of the concrete example 1 only in that the sintering atmosphere is changed to air.

### Comparison Example 3

A photoconductive sheet of sintered Bi₁₂TiO₂₀ has been produced as a comparison example 3 in accordance with a procedure which is different from the procedure used in the production of the concrete example 4 only in that the sintering atmosphere is changed to air.

### Comparison of Performance

In order to evaluate the performance of the concrete examples 1 to 7 of the present invention and the comparison examples 1 to 3 produced as above, the present inventors have produced samples of a radiation detector unit (for a radiation imaging panel) respectively containing the concrete examples 1 to 7 and the comparison examples 1 to 3 as photoconductive layers.

The samples of the radiation detector unit have been produced in the following manner. Each of the photoconductive sheets (as the concrete examples 1 to 7 and the comparison examples 1 to 3) is bonded to an aluminum substrate with the electrically conductive paste DOTITE, which is manufactured by Fujikura Kasei Co., Ltd., Japan. In addition, an upper electrode of gold having a thickness of 60 nm is formed by sputtering.

The radiation detector unit has been exposed to 20 milliroentgens of X rays for 0.1 seconds. Then, a pulsed photocurrent which is generated when a voltage of 80 kV is applied to the radiation detector unit has been converted into a voltage by a current amplifier, and the voltage has been measured with a digital oscilloscope. Thereafter, the amount of collected charges is obtained by integrating the measured photocurrent over the X-ray exposure time.

In addition, the ratio of the light reflectance at the wavelength of 750 nm to the light reflectance at the wavelength of 350 nm is obtained in the following manner.

A portion of each example of the photoconductive sheet on which the upper electrode of gold is not formed has been broken into fragments, and the fragments are formed into pellets. Then, the light reflectances at the wavelengths in the range of 350 to 800 nm are measured by a spectrophotometer using an integrating sphere (Hitachi U-3310, manufactured by Hitachi High-Technologies Corporation).

**Table 1**

| | Composition | Reflectance Ratio | Collected Charges (Relative Amount) |
|---|---|---|---|
| Concrete Example 1 | Bi₁₂TiO₂₀ | 7.1 | 4.2 |
| Concrete Example 2 | Bi₁₂TiO₂₀ | 7.5 | 9.3 |
| Concrete Example 3 | Bi₁₂TiO₂₀ | 7.8 | 12.1 |
| Concrete Example 4 | Bi₁₂TiO₂₀ | 8.3 | 15.7 |
| Concrete Example 5 | Bi₁₂TiO₂₀ | 8.1 | 14.9 |
| Concrete Example 6 | Bi₁₂SiO₂₀ | 7.5 | 8.9 |
| Concrete Example 7 | Bi₁₂GeO₂₀ | 7.7 | 9.7 |
| Comparison Example 1 | Bi₁₂TiO₂₀ | 6.5 | 1 |
| Comparison Example 2 | Bi₁₂TiO₂₀ | 6.6 | 1.2 |
| Comparison Example 3 | Bi₁₂TiO₂₀ | 6.9 | 1.5 |

The results of the above measurement of the amount of collected charges and the ratio of the light reflectance at the wavelength of 750 nm to the light reflectance at the wavelength of 350 nm are indicated in Table 1. Hereinafter, the ratio of the light reflectance at the wavelength of 750 nm to the light reflectance at the wavelength of 350 nm is referred to as the reflectance ratio. Although the values of reflectance ratio indicated in Table 1 are based on the measurement made on the pellets, the present inventors have confirmed that the values of reflectance ratio are substantially not changed even when the measurement is made on the sintered sheet per se. In addition, in Table 1, the indicated values of the amount of collected charges are values relative to the amount of collected charges obtained in the comparison example 1.

As indicated in Table 1, the amount of collected charges in the concrete example 1 is nearly three times the amount of collected charges in the comparison example 3, although the ratio 7.1 of the light reflectance at the wavelength of 750 nm to the light reflectance at the wavelength of 350 nm in the concrete example 1 is close to the ratio 6.9 of the light reflectance at the wavelength of 750 nm to the light reflectance at the wavelength of 350 nm in the comparison example 3. The present inventors have confirmed that the amount of collected charges remarkably increases when the light reflectance at the wavelength of 750 nm to the light reflectance at the wavelength of 350 nm reaches seven. As indicated in Table 1, the average amount of collected charges in the concrete examples 1 to 7 (in which reflectance ratio is not smaller than seven) is as high as approximately ten times reflectance ratio in the comparison example 1.

In the aforementioned processes for producing the concrete examples 1 to 7, the sintering atmosphere, the setter, and the purities of the raw material (bismuth oxide and titanium oxide) are appropriately adjusted so as to make reflectance ratio equal to or greater than seven. Further, reflectance ratio can also be increased by appropriately adjusting the prebaking temperature, the prebaking atmosphere, the method for shaping the powder, the sintering temperature, the gas flow rate for realizing the sintering atmosphere, and the like.

FIG. 10 is a graph indicating relationships between the wavelength and the light reflectance in the concrete example 4 according to the present invention and the comparison example 3. Since the bandgap in Bi₁₂TiO₂₀ is 3.2 eV, both of the photoconductive sheet as the concrete example 4 and the photoconductive sheet as the comparison example 3 absorb almost all light at the wavelength of 350 nm. On the other hand, the photoconductive sheet as the concrete example 4 absorbs less light and reflects more light at the wavelength of 750 nm than the photoconductive sheet as the comparison example 3, since the photoconductive sheet as the comparison example 3 contains more impurity and defects which affect the absorption and the light reflectance than the photoconductive sheet as the concrete example 4.

As explained above, the photoconductive sheet according to the present invention (which constitutes the radiation imaging panel according to the present invention) is made of a bismuth-mixed metal oxide Bi₁₂MO₂₀, and the ratio of the light reflectance of the photoconductive sheet at the wavelength of 750 nm to the light reflectance at the wavelength of 350 nm is equal to or greater than seven. Therefore, the photoconductive sheet can collect a great amount of X-ray charges, so that the sensitivity of the radiation imaging panel increases. Further, in the case where the bismuth-mixed metal oxide Bi₁₂MO₂₀ forming the photoconductive layer is sintered, it is possible to increase the X-ray absorption efficiency. In addition, since electric charges generated in such a photoconductive layer can be more effectively captured, it is possible to greatly increase the sensitivity.

All of the contents of the Japanese patent application No. 2005-185107 are incorporated into this specification by reference.

## Claims

1. A photoconductive sheet for use as a photoconductive layer in a radiation imaging panel which records an electrostatic latent image representing a radiographic image, **characterized in** being formed of a bismuth-mixed metal oxide Bi₁₂MO₂₀ so as to exhibit a first light reflectance at a first wavelength of 750 nm and a second light reflectance at a second wavelength of 350 nm, where M is at least one of Ge, Si, and Ti, and the first light reflectance is seven or more times greater than the second light reflectance.

2. A photoconductive sheet according to claim 1, wherein said bismuth-mixed metal oxide Bi₁₂MO₂₀ is sintered.

3. A radiation imaging panel for recording an electrostatic latent image representing a radiographic image, **characterized in** comprising,
a photoconductive layer formed of a bismuth-mixed metal oxide Bi₁₂MO₂₀ so as to exhibit a first light reflectance at a first wavelength of 750 nm and a second light reflectance at a second wavelength of 350 nm, where M is at least one of Ge, Si, and Ti, and the first light reflectance is seven or more times greater than the second light reflectance.

4. A radiation imaging panel according to claim 3, wherein said photoconductive layer is formed of sintered bismuth-mixed metal oxide Bi₁₂MO₂₀.
